# EUROPÄISCHE PATENTSCHRIFT

(11) **EP 1 934 001 B1**
(45) Veröffentlichungstag und Bekanntmachung des Hinweises auf die Patenterteilung: **24.08.2011**
(21) Anmeldenummer: 06777147.7
(22) Anmeldetag: 01.09.2006
(51) Int. Cl.: B22C 1/02, C04B 20/00, C08K 7/28, B22C 9/10

(54) **BORSILIKATGLASHALTIGE FORMSTOFFMISCHUNGEN**
BOROSILICATE GLASS-CONTAINING MOLDING MATERIAL MIXTURES
MELANGES DE MATERIAU MOULABLE CONTENANT DU VERRE AU BOROSILICATE

(30) Priorität: 02.09.2005 DE 102005041863
(43) Veröffentlichungstag der Anmeldung: 25.06.2008
(73) Patentinhaber: Ashland-Südchemie-Kernfest GmbH, 40721 Hilden (DE)
(72) Erfinder: STÖTZEL, Reinhard, 46325 Borken (DE); KOCH, Diether, 40822 Mettmann (DE); GIENIEC, Antoni, 40721 Hilden (DE); MÜLLER, Jens, 42781 Haan (DE); WEICKER, Günter, 42699 Solingen (DE); WERNER, Hans-Jürgen, 45134 Essen (DE)
(74) Vertreter: Schupfner, Georg
(86) Internationale Anmeldenummer: PCT/EP2006/008571
(87) Internationale Veröffentlichungsnummer: WO 2007/025769

(56) Entgegenhaltungen:
- GB-A- 826 340
- US-A- 4 735 973

## Beschreibung

Die Erfindung betrifft eine Formmasse für die Herstellung von Formkörpern für die Gießereiindustrie, ein Verfahren zum Herstellen solcher Formkörper für die Gießereiindustrie, Formkörper für die Gießereiindustrie, und die Verwendung solcher Formkörper für die Gießereiindustrie in einem Verfahren zum Gießen eines Gussstücks.

Bei der Herstellung von Metallgussstücken wird zunächst ein Modell hergestellt, das in seiner Form im Wesentlichen dem herzustellenden Metallgussstück entspricht. An diesem Modell werden zuführelemente und Speiser angebracht. Für die Herstellung einer Gießform wird das Modell in einem Formkasten mit einer Formstoffmischung umgeben. Die Formstoffmischung besteht im Wesentlichen aus einem feuerfesten Formstoff, beispielsweise Quarzsand, und einem Bindemittel, mit welchem die Körner des Formstoffes beim Aushärten zu einem festen Formkörper verbunden werden. Die Formstoffmischung wird verdichtet und dann ausgehärtet. Zum Aushärten kann der Formkörper beispielsweise erhitzt werden, um Lösungsmittel zu verdampfen, das im Bindemittel enthalten ist oder um eine Vernetzungsreaktion im Bindemittel zu initiieren. Es kann aber auch ein Katalysator zugegeben werden, entweder bereits bei der Herstellung der Formstoffmischung oder indem ein gasförmiger Katalysator durch den verdichteten Formkörper geleitet wird. Nach dem Aushärten wird der Formkörper aus dem Formkasten bzw. dem Modell entnommen.

Gießformen setzen sich zusammen aus Formen und Kernen. Durch die Formen wird die äußere Kontur des Gussteiles definiert. Die innere Kontur des Gussteiles bzw. die Begrenzung eines im Gussteil angeordneten Hohlraumes wird durch Kerne ausgebildet. In der fertigen Gießform ist zwischen Form und Kern ein Formhohlraum ausgebildet, der beim Guss mit flüssigem Metall ausgefüllt wird.

Neben Kernen und Formen gibt es noch Hohlkörper, so genannte Speiser, die als Ausgleichsreservoir wirken. Diese nehmen während des Gusses zunächst flüssiges Metall auf, wobei durch entsprechende Maßnahmen dafür gesorgt wird, dass das Metall länger in der flüssigen Phase verbleibt als das Metall, das sich im Formhohlraum befindet. Erstarrt das Metall im Formhohlraum, kann flüssiges Metall aus dem Ausgleichsreservoir nachfließen, um die beim Erstarren des Metalls auftretende Volumenkontraktion auszugleichen.

Nachdem die Gießform ggf. aus mehreren Formkörpern zusammengesetzt wurde, wird in den Formhohlraum der Gießform flüssiges Metall eingefüllt. Das einfließende flüssige Metall verdrängt dabei die im Formhohlraum befindliche Luft. Die Luft entweicht durch in der Gießform vorgesehene Öffnungen oder durch poröse Abschnitte der Gießform, beispielsweise durch die Wand eines Speisers. Nach dem Erstarren des Metallgussstücks wird dieses aus der Gießform entnommen. Dazu kann beispielsweise die Gießform gerüttelt werden, sodass diese wieder zu Körnern zerfällt.

Das Gussteil wird durch weiteres Rütteln von den innen liegenden Kernen befreit.

Die Oberfläche der Metallgussstücke weist oft noch Defekte auf, sodass eine maschinelle Nachbearbeitung erforderlich ist, um die gewünschte Beschaffenheit der Oberfläche zu erreichen. Grund für diese Defekte ist die Hitze, die beim Abgießen des geschmolzenen Metalls auf die Gießform einwirkt, welche Spannungen im Material der Gießform erzeugt. Dies führt zur Ausbildung von Rissen an der Oberfläche der Form bzw. der Kerne. Das geschmolzene Metall durchdringt diese Risse und hinterlässt so im Gussstück laminare Strukturen, die allgemein auch als Blattrippen bezeichnet werden. Dieser Gussfehler tritt insbesondere bei Verwendung von Quarzsand als Formstoff auf, da der Quarzsand unter der Wärmeeinwirkung des flüssigen Metalls eine Umwandlung seiner Kristallstruktur und damit beispielsweise auch seiner Dichte erfährt. Daneben treten noch weitere Gussfehler auf, wie Schülpen, Penetration und Vererzungen.

Um Gussfehler weitgehend zurückzudrängen, werden der Formstoffmischung neben Quarzsand verschiedene Additive zugegeben, welche die Volumenänderung des Formstoffes ausgleichen sollen.

Beispielsweise wird dem Quarzsand Eisenoxid in Mengen von etwa 1 bis 3 Gew.-% zugegeben. Aus dem Quarz und dem Eisenoxid kann sich Fayalit bilden, wodurch die in der Gießform auftretenden Spannungen vermindert und damit die Neigung zur Blattrippenbildung reduziert wird. Nachteilig ist jedoch die bei der Zugabe von Eisenoxid zu beobachtende geringere mechanische Beständigkeit der Gießform. Zudem führt die Bildung von Fayalit zu einer erhöhten Gefahr einer Penetration des Metalls in die Gießform, was auf den Gussstücken Unebenheiten erzeugt, die wiederum nachbearbeitet werden müssen. Weiter kann zur Verringerung der Blattrippenbildung der Formstoffmischung organisches Material, wie Holzmehl oder Kohlenstaub in Mengen von etwa 1 bis 3 Gew.-% zugegeben werden. Das organische Material verbrennt während des Gießprozesses. Dabei entstehen über das gesamte Volumen der Gießform Hohlräume, durch welche das Volumenwachstum des Quarzsandes aufgefangen wird, sodass sich nach außen hin keine Gröβenveränderung der Gießform ergibt. Nachteilig an diesen Additiven ist die bei der Verbrennung entstehende Menge an Gas. Kann das Gas nicht aus der Gießform entweichen, bilden sich im flüssigen Metall durch eindringendes Gas Blasen aus, die im erstarrten Gussstück Hohlräume bilden. Ferner wird durch den Zusatz der oben beschriebenen organischen Additive die Stabilität der Gießform herabgesetzt, sodass diese den beim Gießvorgang auftretenden mechanischen Belastungen schlechter widerstehen kann.

Weiter kann die Ausbildung von Blattrippen auch durch die Zugabe von 0,5 bis 5 Gew.-% Titanoxid zum Formsand zurückgedrängt werden, wie dies beispielsweise in der US 4,735,973 beschrieben ist. Durch das Titanoxid wird die thermische Ausdehnung des Formstoffes verringert und so die Ausbildung von Blattrippen weitgehend verhindert. Titandioxid beeinträchtigt auch nicht die mechanische Beständigkeit der Gießform und es tritt durch das Additiv auch keine Bildung zusätzlicher Gase auf. Allerdings wird bei Formstoffmischungen, die Titanoxid als Additiv enthalten, eine erhöhte Neigung zur Penetration des flüssigen Metalls in die Wandbereiche der Gießform beobachtet, sodass vor dem Abgießen die Oberfläche der Gießform mit einer Schlichte oder anderen Materialien behandelt werden muss.

Als weitere Möglichkeit, die Qualität des Gusstücks zu verbessern, können auch Formstoffe mit einer geringen Wärmeausdehnung verwendet werden, wie beispielsweise Chromit-, Zirkonium- oder Olivinsand. Gießformen aus diesen Formstoffen verursachen nur in geringem Ausmaß die Ausbildung von Blattrippen. Diese Formstoffe sind jedoch relativ teuer.

Schließlich kann der Sand auch in der Weise behandelt werden, dass er zunächst im Ofen zu einer Art Paste geschmolzen und nach dem Erstarren gemahlen wird. Der erhaltene Sand wird mit ungefähr 50 % Quarzsand vermischt. Der so erhaltene Formstoff dehnt sich beim Abguss nicht mehr aus, sodass nahezu keine Bildung von Blattrippen mehr beobachtet wird. Nachteilig ist bei dieser Methode der Aufwand für die Herstellung des Formstoffs und die damit verursachten hohen Kosten.

In der EP 0 891 954 A1 werden Formstoffmischungen beschrieben, welche einen Anteil an Aluminiumsilikat-Mikrohohlkugeln enthalten. Durch den Zusatz von Aluminiumsilikat-Mikrohohlkugeln kann die Ausbildung von Rissen an der Oberfläche der Gießform deutlich zurückgedrängt werden. Die thermische Ausdehnung des Formstoffes wird durch die Kugelhohlräume ausgeglichen. Das Additiv verringert weder die mechanische Belastbarkeit der Gießformen, noch führt es zu einer verstärkten Gasbildung. Um ein optimales Ergebnis beim Guss erhalten zu können, muss jedoch der Anteil der Hohlkugeln bezogen auf die gesamte Formstoffmischung, im Bereich von etwa 10 - 20% gewählt werden. Dadurch erhöhen sich wiederum die Kosten für die Herstellung der Gießform.

In der DE 196 09 539 wird vorgeschlagen, Kryolith als Additiv zu Formstoffmischungen für die Gießereiindustrie zuzusetzen. Eine blattrippenfreie Oberfläche kann durch Zugabe von 0.1 - 10 Gew.% Kryolith, bezogen auf den Sand, erzielt werden. Kryolith kann dabei sowohl als alleiniges Additiv als auch in Verbindung mit anderen Komponenten, wie Holzmehlen, Glimmer, Eisenoxid etc. verwendet werden. Allerdings treten bei der Verwendung von Kryolith andere Gussfehler auf, die sich u.a. in einer extremen Vernarbung der Gussoberfläche bemerkbar machen.

Eine weitere Technik, die in der Gießerei zur Verbesserung der Gussoberfläche eingesetzt wird, stellt der Überzug von Gießformen mit Suspensionen (hoch-)feuerfester anorganischer Materialien dar. Dieser Formüberzug, allgemein als Schlichte bezeichnet, soll die Gießform vor der thermischen Belastung durch das geschmolzene Metall schützen, so zu einer Verbesserung der Gussoberfläche führen, eine saubere Trennung von flüssigem Metall und Gießform ermöglichen und Gussoberflächenfehler reduzieren.

Schlichten bestehen im einfachsten Fall aus einer Trägerflüssigkeit, in welcher ein feinteiliger feuerfester Stoff suspendiert ist. Die Schlichte kann z. B. durch Streichen, Spritzen, Gießen oder Tauchen auf zumindest die Flächen der Gießform aufgebracht werden, die mit dem flüssigen Metall in Berührung gelangen. Bindemittel, die in der Trägerflüssigkeit enthalten sind, sorgen nach Abtrocknung für eine Fixierung der anorganischen Grundstoffe an.der Oberfläche der Gießform.

Typische anorganische Grundstoffe, die in Schlichten verwendet werden, sind mineralische Oxide, wie Korund, Magnesit, Mullit, Quarz oder Chromit, Silikate, wie Zirkonsilikat, Olivin oder Schamotte, sowie Koks oder Grafit. Als Trägerflüssigkeit können Wasser oder organische Lösungsmittel, wie beispielsweise Ethanol oder Isopropanol genutzt werden. Typische Bindemittel sind Stärkederivate, Ligninderivate, Naturharze, Kunstharze oder Kunststoffe. Schlichten enthalten oft noch Suspensionsmittel, die ein Absinken der festen Bestandteile in der Trägerflüssigkeit verhindern. Als Suspensionsmittel werden quellbare Schichtsilikate oder Cellulosederivate eingesetzt, die zur Wassereinlagerung befähigt sind.

Ein häufig auftretender Nachteil von Schlichten ist die sehr dichte Struktur der Formüberzüge, so dass keine ausreichende Gasdurchlässigkeit gewährleistet werden kann. Diese ist jedoch erforderlich, um die beim Gießprozess durch thermische Zersetzung der Bindemittel entstehenden Gase kontrolliert abführen zu können. Andernfalls kann der kern innere Gasdruck den metallostatischen Gegendruck übersteigen und zum Kochen des Metalls und somit zum Gasblaseneinschluss im Gussstück führen. Auch ein teilweises Abplatzen des Oberzugs und anschließender Einschluss des Fragments im Gussstück kann beobachtet werden.

In der DE-C 42 03 904 wird zur Erhöhung der Gasdurchlässigkeit vorgeschlagen, organische Fasern in die Schlichte einzubringen. Die Fasern neigen jedoch zur Knäuelbildung, so dass weder eine Gleichverteilung noch ein glatter Auftrag der Schlichte gewährleistet werden kann

In der WO 94/26440 wird eine Gießereischlichte zur Herstellung von Formaberzügen beschrieben, welche einen Gehalt an anorganischen Hohlkugeln in einer Menge von 1-40 Gew.%, bezogen auf die gebrauchsfertige Schlichte, enthält. Die Schlichte kann zusätzlich noch einen Gehalt an anorganischen oder organischen Fasern in einer Menge von 0,1 - 10 Gew.%, bezogen auf die gebrauchsfertige Schlichte, aufweisen. Die Hohlkugeln sind vorzugsweise mit einem Inertgas gefüllt. Sie können aus Oxiden, wie Aluminiumoxid, Quarz, Magnesit, Mullit, Chromit, Zirkonoxid und/oder Titandioxid, aus Boriden, Carbiden und Nitriden, wie Siliciumcarbid, Titancarbid, Titanborid, Bornitrid und/oder Borcarbid, aus Kohlenstoff, Glas oder Metallen oder Mischungen dieser Materialien bestehen. In den Beispielen werden Hohlkugeln aus Aluminiumsilikat verwendet, deren Teilchengröße zu 80 % zwischen 250 - 90 µm liegt. Ihr Anteil beträgt 5 bzw. 10 Gew.-% bei Wasserschlichten, sowie 4 bzw. 10 Gew.-% bei Alkoholschlichten. Hohlkugeln aus anderen Materialien werden in den Beispielen nicht verwendet Über Eigenschaften und Zusammensetzung von Hohlkugeln aus Glas werden keine näheren Angaben gemacht

Die US 4,735,973 offenbart die Verbesserung der Gussstückoberfläche durch Additiveren von Formmassen mit Titandioxid. Die Additivzusammensetzung umfasst neben Titandioxid und Eisenoxid auch Siliciumdioxid und Aluminiumoxid. Borsilikatgläser sind nicht genannt.

Die GB 826340 A offenbart Formkörper und Verfahren zur Herstellung von Gussstücken, welche Kanäle oder Aussparungen aufweisen. Dabei wird ein Kern bzw. Dom in der Form des späteren Kanals mit einem elastischen Gewebeschlauch aus metallischen oder mineralischen Fasern überzogen. Der Gewebeschlauch wird anschließend in ein oder mehrere Schichten einer Schlichte eingebettet. Nach dem Aushärten der Schlichte und dem Entfernen des Doms erhält man ein festes Rohr in der gewünschten Form. Die ausgehärtete Schlichteschicht verbrennt während des Gießens. Eventuelle Reste werden nach dem Abkühlen gegebenenfalls durch Spülen mit geeigneten Flüssigkeiten entfernt. Der freiliegende Gewebeschlauch wird aus dem Kanal herausgezogen. Die Gewebeschläuche aus Kalknatronglasoder Borsilikatglasfasern werden für den Leichtmetallguss eingesetzt. Die Verwendung von Borsilikatglas zur Verbesserung der Gussstückoberfiäche wird nicht offenbart, ebenso werden keine Borsilikatglas-Pulver genannt.

Im Weiteren werden Formstoffmischungen und Schlichten unter dem Begriff "Formmasse" zusammengefasst. Unter einer "Formstoffmischung" werden Mischungen verstanden, die zur Herstellung von Gießformen bzw. Formkörpern durch Formgebung und Aushärten verwendet werden.

Der Erfindung lag als Aufgabe zugrunde, eine Formmasse für die Herstellung von Gießformen für die Gießereiindustrie zur Verfügung zu stellen, welche die Herstellung von Gießformen ermöglicht, die am Gussstück eine glatte, weitgehend gussfehlerfreie Oberfläche erzeugen.

Diese Aufgabe wird mit einer Formmasse für die Herstellung von Gießformen für die Gießereiindustrie mit den Merkmalen des Patentanspruchs 1 gelöst. Vorteilhafte Weiterbildungen der Formmasse sind Gegenstand der abhängigen Ansprüche.

Die erfindungsgemäße Formmasse enthält als wesentlichen Bestandteil ein Borsilikatglas. Überraschend hat sich gezeigt, dass durch den Zusatz von Borsilikatglas eine deutliche Verbesserung der Oberfläche von Gussstücken erreicht werden kann, d.h. die Anzahl bzw. Intensität von Gießfehlern deutlich zurückgedrängt werden kann. Durch den Anteil an Borsilikatglas in der Formmasse kann die Blattrippenbildung sowie die Penetrationsneigung nahezu eliminiert werden. Ein weiterer Vorteil des Zusatzes von Borsilikatglas zur Formmasse ist die besonders glatte Oberfläche des Gussstücks, das beim Abguss erhalten wird. Die aus der erfindungsgemäßen Formmasse hergestellten Formkörper bzw. Gießformen weisen eine hohe mechanische Beständigkeit auf, sodass die Gefahr eines Zerbrechens des Formkörpers bzw. der Gießform beim Entnehmen aus dem Formwerkzeug oder die Erosion der Gießform beim Einfüllen des flüssigen Metalls im Vergleich zu den bisher bekannten Gießformen deutlich verringert werden kann.

Die erfindungsgemäße Formmasse kann sowohl als Formstoffmischung für die Herstellung von Gießformen als auch als Schlichte ausgebildet sein. Neben dem Borsilikatglas enthält die erfindungsgemäße Formmasse einen Formstoff sowie ein Bindemittel, mit welchem die Formmasse ausgehärtet werden kann. Bevorzugt wird als Formstoff ein feuerfester Formstoff verwendet.

Als feuerfesten Formstoff können beispielsweise Aluminiumsilikate verwendet werden, beispielsweise faserförmige Feuerfeststoffe, oder auch Quarz-, Zirkonoxid- oder Chromerzsand. Ferner können auch synthetisch hergestellte feuerfeste Formstoffe verwendet werden, wie beispielsweise Mullit (x Al₂O₃ · y SiO₂, mit x = 2 bis 3 und y = 1 bis 2; ideale Formel: Al₂SiO₅). Es ist auch möglich, wieder aufbereiteten Gießereisand als Formstoff einzusetzen.

Bei einer Ausführung der erfindungsgemäßen Formmasse als Schlichte können als Formstoff die für Schlichten üblichen anorganischen Formstoffe verwendet werden. Als Formstoff geeignet sind beispielsweise mineralische Oxide, wie Korund, Magnesit, Mullit, Quarz oder Chromit, Silikate, wie Zirkonsilikat, Olivin oder Schamotte, sowie Koks oder Grafit.

In der Auswahl der Formstoffe bestehen an sich keine Beschränkungen. Es können alle für Formstoffmischungen bzw. Schlichten übliche Formstoffe verwendet werden.

Als weiteren Bestandteil enthält die erfindungsgemäße Formmasse ein Bindemittel zum Aushärten der Formmasse. Auch hier kommen auf dem Gebiet der Gießereitechnik übliche Bindemittel zur Anwendung. Wird die erfindungsgemäße Formmasse als Formstoffmischung für die Herstellung von Formkörpern bzw. Gießformen ausgeführt, können Bindemittel verwendet werden, wie sie beispielsweise beim Cold-Box-, Hot-Box- oder Warm-Box-Verfahren verwendet werden. Es kann beispielsweise auch Wasserglas als Bindemittel verwendet werden. Bevorzugt werden organische Bindemittel eingesetzt. Wird Wasserglas als Bindemittel eingesetzt, enthält die erfindungsgemäße Formmasse in einer Ausführungsform, insbesondere in einer Ausführungsform als Formstoffmischung für die Herstellung von Formkörpern oder von Gießformen, kein teilchenförmiges Metalloxid, insbesondere kein teilchenförmiges Metalloxid, das ausgewählt ist aus der Gruppe von Siliciumdioxid, Aluminiumoxid, Titanoxid und Zinkoxid. Wird die erfindungsgemäße Formmasse als Schlichte ausgebildet, können als Bindemittel beispielsweise Stärkederivate Ligninderivate, Naturharze, Kunstharze oder Kunststoffe verwendet werden.

Der Anteil des Formstoffs bzw. des Bindemittels wird innerhalb üblicher Bereiche gewählt. Bei einer Ausführungsform als Formstoffmischung für die Herstellung von Formkörpern bzw. Gießformen ist üblicherweise der Formstoff in einem Anteil von 50 - 99,7 Gew.-%, vorzugsweise 80 bis 99,5 Gew.-%, und das Bindemittel in einem Anteil von 0,3 bis 20 Gew.-%, vorzugsweise 0,5 bis 10 Gew.-%, enthalten, jeweils bezogen auf das Gewicht der Formmasse. Bei einer Ausführung der erfindungsgemäßen Formmasse als Schlichte ist der Formstoff in einem Anteil von 50 bis 98 Gew.-%, vorzugsweise 60 bis 90 Gew.-% enthalten und das Bindemittel in einem Anteil von 2 bis 10 Gew.-%, vorzugsweise 3 bis 5 Gew.-%, jeweils bezogen auf den Feststoffanteil der Schlichte, also ohne Lösungsmittel.

Neben den genannten Bestandteilen kann die erfindungsgemäße Formmasse noch weitere übliche Bestandteile enthalten, beispielsweise Tonmineralien, Grafit, Dextrine, Mineralöle, usw.

Die vorteilhaften Eigenschaften der erfindungsgemäßen Formmasse lassen sich bereits bei sehr geringen Anteilen an Borsilikatglas beobachten. Bevorzugt ist das Borsilikatglas in einem Anteil von mindestens 0,001 Gew.-%, vorzugsweise mindestens 0,005 Gew.-%, insbesondere mindestens 0,01 Gew.-% bezogen auf den Formstoff bzw. bei der Schlichte bezogen auf den Feststoffanteil, in der Formmasse enthalten. Der Anteil des Borsilikatglases wird bevorzugt kleiner als 5 Gew.-%, insbesondere bevorzugt kleiner als 2 Gew.-% und ganz besonders bevorzugt innerhalb eines Bereiches von 0,01 bis 1 Gew.-% gewählt, jeweils bezogen auf den Formstoff bzw. bei der Schlichte auf den Feststoffanteil.

Das Borsilikatglas ist in Form eines Granulats oder eines Pulvers in der erfindungsgemäßen Formmasse enthalten . Der Partikeldurchmesser des Granulats bzw. Pulvers wird so gewählt, dass der mittlere Durchmesser D₅₀ im Bereich von 5 - 500 µm, insbesondere bevorzugt 10 - 250 µm liegt. Der mittlere Durchmesser D50 lässt sich mit üblichen Verfahren ermitteln, beispielsweise durch Siebanalyse oder Lasergranulometrie. Die Feinheit des Granulats bzw. Pulvers wird insbesondere bevorzugt so gewählt, dass der Rückstand auf einem Sieb der Maschenweite 350 µm höchstens 10 Gew.-% beträgt und der Rückstand auf einem Sieb der Maschenweite 200 µm höchstens 20 Gew.% beträgt.

Gemäß einer besonders bevorzugten Ausführungsform ist das Borsilikatglas in Form von Mikrohohlkugeln In der Formmasse enthalten. Unter Mikrohohlkugeln werden dabei Hohlkügelchen mit einem Durchmesser in der Grössenordnung von bevorzugt 5 - 500 µm, insbesondere bevorzugt 10 - 250 µm verstanden, deren Schale aus Borsilikatglas aufgebaut ist. Die Mikrohohlkugeln sind bevorzugt mit Wasserstoff, Luft oder einem inerten Gas gefüllt, beispielsweise Stickstoff oder Gemischen aus Stickstoff und Kohlendioxid.

Die Mikrohohlkugeln weisen vorzugsweise einen Durchmesser von weniger als 200 µm auf. Die Größe der Mikrohohlkugeln lässt sich beispielsweise durch Siebanalyse ermitteln.

Vorzugsweise weisen die Mikrohohlkugeln eine Wandstärke von 5 - 30 %, insbesondere 6 - 20 % ihres Außendurchmessers auf.

Die Mikrohohlkugeln weisen vorzugsweise eine Schüttdichte von weniger als 1,2 g/ml, insbesondere bevorzugt weniger als 0,5 g/ml auf.

Die in der erfindungsgemäßen Formmasse enthaltenen Mikrohohlkugeln können aus üblichem Borsilikatglas aufgebaut sein. Das Borsilikatglas enthält vorzugsweise 2 bis 10 Gew.-% Natriumoxid und Kaliumoxid, 1 bis 10 Gew.-% Aluminiumoxid, 0 bis 10 Gew.-% Erdalkalimetalloxide, sowie 60 bis 90 Gew.-% Siliziumdioxid. Das Borsilikatglas weist vorzugsweise einen Anteil an Bor, berechnet als B₂O₃, von mehr als 3 Gew.-%, insbesondere Bevorzugt 5 bis 15 Gew.-% auf. Weitere Bestandteile können organische Silane oder Siloxane, wie beispielsweise Methyltrimethoxysilan oder Dimethylpolysiloxan, sein.

Die Erfinder nehmen an, dass das Borsilikatglas, insbesondere wenn dieses in Form von Mikrohohlkugeln in der Formmasse enthalten ist, unter dem Einfluss der Temperatur des flüssigen Metalls schmilzt und dadurch Hohlräume freigegeben werden, welche die durch die Temperaturzunahme bedingte Volumenzunahme des Formstoffs ausgleichen können.

Bevorzugt wird der Erweichungspunkt des Borsilikatglases im Bereich von weniger als 1500 °C, insbesondere bevorzugt im Bereich von 500 bis 1000 °C eingestellt.

Wie bereits weiter oben erläutert kann die erfindungsgemäße Formmasse als Formstoffmischung zur Herstellung von Formkörpern bzw. Gießformen, insbesondere Formen und Kernen, ausgestaltet sein. Zur Verfestigung der Formmasse enthält diese ein für die Verfestigung von Formmassen übliches Bindemittel. Bevorzugt ist das Bindemittel ausgewählt aus Cold-Box-Bindemitteln, Hot-Box-Bindemitteln, selbsthärtenden Bindemitteln und Wasserglas (Silikatbindemitteln).

Die Neigung zur Blattrippenbildung ist bei Cold-Box-Bindemitteln besonders stark ausgeprägt. Die Verwendung von Borsilikatglas-Mikrohohlkugeln ist daher besonders in solchen Formmassen bevorzugt, die ein Cold-Box-Bindemittel enthalten.

Das Cold-Box-Bindemittel ist bevorzugt ausgewählt aus der Gruppe von Phenol-Urethan-Harzen, welche durch Amine ausgehärtet werden können, Epoxy-Acryl-Harzen, welche durch SO₂ ausgehärtet werden können, alkalischen Phenolharzen, welche durch CO₂ oder durch Methylformiat ausgehärtet werden können. Daneben kann auch Wasserglas als Bindemittel verwendet werden, welches unter anderem durch CO₂ ausgehärtet werden kann, sowie selbsthärtende Harze.

Besonders bevorzugt werden Phenol-Urethan-Harze, welche durch Amine ausgehärtet werden können, als Bindemittel verwendet. Diese Bindemittel sind dem Fachmann an sich bekannt. Solche Bindemittelsysteme sind beispielsweise in der US 3,409,579 oder der US 4,526,219 beschrieben.

Gemäß einer weiteren bevorzugten Ausführungsform wird Wasserglas als Bindemittel eingesetzt. Als Wasserglas können dabei übliche Wassergläser verwendet werden, wie sie bereits als Bindemittel in Formstoffmischungen für die Gießereiindustrie verwendet werden. Diese Wassergläser enthalten gelöste Natrium- oder Kaliumsilikate und können durch Lösen von glasartigen Kalium- und Natriumsilikaten in Wasser hergestellt werden. Das Wasserglas weist vorzugsweise ein Modul SiO_{2/}M₂O im Bereich von 2,0 bis 3,5 auf, wobei M für Natrium und/oder Kalium steht. Die Wassergläser weisen vorzugsweise einen Feststoffanteil im Bereich von 20 bis 50 Gew.-% auf. Es kann auch festes Wasserglas in der erfindungsgemäßen Formmasse enthalten sein. Für die Anteile an der Formmasse werden jeweils nur die Feststoffanteile des Wasserglases berücksichtigt. Wird Wasserglas als Bindemittel eingesetzt, lässt sich dieses beispielsweise auch durch Dehydratation aushärten.

Ein besonderer Vorteil des erfindungsgemäßen Zusatzes von Borsilikatglas, insbesondere in Form von Borsilikatglas-Mikrohohlkugeln zu einer Formmasse besteht darin, dass durch den erfindungsgemäßen Zusatz von Borsilikatglas die Eigenschaften anderer Additive nicht negativ beeinflusst werden. Neben dem Borsilikatglas kann die erfindungsgemäße Formmasse daher gemäß einer bevorzugten Ausführungsform zumindest ein weiteres Additiv zur Verringerung der Blattrippenbildung umfassen.

Das zumindest eine weitere Additiv ist dabei bevorzugt ausgewählt aus organischen brennbaren Verbindungen, Glimmer und Eisenoxid.

Gemäß einer weiteren bevorzugten Ausführungsform umfasst die erfindungsgemäße Formmasse einen Zusatz zumindest einer organischen und/oder anorganischen Säure und/oder einer Säurequelle.

Die Verarbeitungszeit einer Formmasse hängt häufig von ihrem pH-Wert ab. So können beispielsweise Basen den Aushärteprozess der Formmasse insbesondere im Cold-Box-Verfahren beschleunigern. Da der Zusatz von Mikrohohlkugeln zu Formmassen eine Veränderung des pH-Wertes bewirken kann, ist es möglich dieser pH-Wert-Veränderung und der damit evtl. verbundenen Verkürzung der Verarbeitungszeit der Formmasse durch Zusatz geeigneter Stoffe entgegenzuwirken. Dieses kann beispielsweise durch den Zusatz von organischen oder anorganischen Säuren geschehen, aber auch der Zusatz allgemein gebräuchlicher Puffer ist möglich. Beispiele für solche Säuren sind unter anderem Ameisensäure, Essigsäure, Maleinsäure, Malonsäure, Fumarsäure, Adipinsäure, Benzoesäure, div. Fettsäuren wie Ölsäure, Laurinsäure oder Stearinsäure, Milchsäure, Zitronensäure, Oxalsäure, Borsäure, Phenolsulfonsäure, para-Toluolsulfonsäure, Salicylsäure, Glykolsäure, Glyoxylsäure, Phosphorsäure, Schwefelsäure, Salzsäure, Fluorwasserstoffsäure oder auch Stoffe, die als Quellen für o.g. Säuren zur Verfügung stehen, wie beispielsweise Phosphoroxychlorid. Bei der Herstellung der Formmasse können diese Säuren dabei der Formmasse in Substanz zugegeben werden, oder auch als Gemisch mit dem Formstoff und/oder dem Bindemittel, oder auch als Gemisch mit weiteren Additiven.

Gemäß einer weiteren bevorzugten Ausführungsform ist die erfindungsgemäße Formmasse als Schlichte ausgebildet. Die Schlichte kann dabei sowohl als Wasserschlichte, wie auch beispielsweise als Alkoholschlichte ausgebildet sein. Die erfindungsgemäßen Schlichten gleichen im Wesentlichen den bereits bekannten Schlichten, wobei jedoch zusätzlich Borsilikatglas-Mikrohohlkugeln in der Schlichte enthalten sind. Der Anteil des Wassers bzw. des Alkohols beträgt bevorzugt etwa 20 bis 80 Gew.-%, insbesondere bevorzugt 40 - 70 Gew.-%. Die erfindungsgemäßen Schlichten enthalten übliche Bestandteile, wie beispielsweise Bentonite zur Einstellung der Fließeigenschaften, Fasern, Grafit, Netzmittel oder Könservierungsmittel. Bei der Verwendung der erfindungsgemäßen Schlichten wird ein Abplatzen des Schutzüberzuges unter dem Einfluss des flüssigen Metalls, wenn überhaupt, nur in äußerst seltenen Fällen beobachtet.

Die erfindungsgemäße Formmasse kann neben den Borsilikat-Mikrohohlkugeln auch Mikrohohlkugeln aus anderen Materialien, beispielsweise aus Aluminiumsilikaten enthalten. Bevorzugt enthält die erfindungsgemäße Formmasse jedoch nur Mikrohohlkugeln aus Borsilikatglas und keine Mikrohohlkugeln aus anderen Materialien.

Ein weiterer Gegenstand der Erfindung betrifft ein Verfahren zur Herstellung eines Formkörpers für die Gießereiindustrie, wobei
- ein Modell bereitgestellt wird, welches zumindest einem Abschnitt eines Gussstücks entspricht;
- eine Formstoffmischung in das Modell eingebracht wird;
- die Formstoffmischung zu einem Formkörper ausgehärtet wird; und
- der Formkörper aus dem Modell entnommen wird.

Das erfindungsgemäße Verfahren zeichnet sich dadurch aus, dass zumindest Flächen des Formkörpers, welche beim Metallgießen mit dem flüssigen Metall in Berührung gelangen, von einer Formmasse gebildet werden, wie sie oben beschrieben worden ist.

Unter einem Formkörper für die Gießereiindustrie wird allgemein ein Formkörper verstanden, wie er zur Formgebung eines Gussstücks beim Metallguss verwendet wird. Derartige Formkörper sind beispielsweise Formen und Kerne, sowie auch Hohlkörper, wie Speiser oder Zufuhrelemente. Unter Gießformen werden Formen verstanden, wie sie unmittelbar für den Metallguss eingesetzt werden. Solche Gießformen können aus mehreren Formkörpern zusammengesetzt sein.

Wesentliches Merkmal des erfindungsgemäßen Verfahren ist, dass die Herstellung des Formkörpers in der Weise durchgeführt wird, dass zumindest die Flächen, die beim Abguss mit dem flüssigen Metall in Berührung gelangen, einen Anteil an Borsilikatglas, insbesondere Bosilikatglas-Mikrohohlkugeln aufweisen.

Dies kann auf verschiedene Weise erreicht werden. Gemäß einer ersten Ausführungsform des Verfahrens besteht die Formstoffmischung zur Herstellung des Formkörpers vollständig aus einer Formmasse, wie sie oben beschrieben wurde und welche einen Anteil an Borsilikatglas aufweist. Wie bereits weiter oben erläutert, wird das Borsilikatglas bevorzugt in Form von Mikrohohlkugeln in die Formmasse eingebracht. Bei der Herstellung der Formmasse können die Borsilikatglas-Mikrohohlkugeln dabei der Formmasse in Substanz zugegeben werden, oder auch als Gemisch mit dem Formstoff und/oder dem Bindemittel, oder auch als Gemisch mit anderen Additiven. Bei der Herstellung der Formmasse sollten wegen der relativ geringen mechanischen Belastbarkeit der Mikrohohlkugeln keine hohen Scherkräfte auf die Formmasse einwirken, um eine vorzeitige Zerstörung der Mikrohohlkugeln zu vermeiden.

Die Formmasse kann so in das Modell eingebracht werden, dass nur Teile des Modells mit der Formmasse ausgefüllt werden, welche Borsilikatglas enthält, während das verbleibende Volumen von einer Formstoffmischung ausgefüllt wird, die frei ist von Borsilikatglas. Bevorzugt wird jedoch der gesamte Formkörper aus einer Formmasse hergestellt, welche Borsilikatglas, insbesondere in Form von Mikrohohlkugeln enthält. Bei dieser Ausführungsform wird also ein Formkörper erhalten, bei welchem homogen über das gesamte Volumen hinweg Borsilikatglas, beispielsweise in Form von Mikroholkugeln, verteilt ist.

Das Modell für die Herstellung des Formkörpers entspricht dabei einem Modell, wie es oben im einleitenden Teil bereits beschrieben wurde, wobei das Model ggf. auch den Formkasten mit einschließt.

Gemäß einer weiteren Ausführungsform des erfindungsgemäßen Verfahrens wird die oben beschriebene Formmasse in Form einer Schlichte als Formüberzug aufgebracht. Der Formkörper für die Gießereiindustrie kann dabei aus einer Formstoffmischung hergestellt sein, welche ebenfalls Borsilikatglas-Mikrohohlkugeln enthält, oder die frei ist von Borsilikatglas-Mikrohohlkugeln. Die Schlichte wird dabei auf den gehärteten oder den ungehärteten Formkörper mit üblichen Verfahren aufgetragen, beispielsweise durch Aufsprühen, Aufstreichen oder durch Eintauchen der Gießform in die Schlichte.

Ein weiterer Gegenstand der Erfindung betrifft einen Formkörper für die Gießereiindustrie, aufgebaut aus einem feuerfesten Formstoff, dadurch gekennzeichnet, dass zumindest in Abschnitten des Formkörpers, die bei einem Gießvorgang mit flüssigem Metall in Berührung gelangen, Borsilikatglas enthalten ist. Beim erfindungsgemäßen Verfahren wurde bereits erläutert, dass das Borsilikatglas nur in äußeren Abschnitten der Gießform bzw. des Formkörpers enthalten sein kann, beispielsweise in Form eines aus einer Schlichte hergestellten Formstoffüberzugs, oder homogen über den gesamten Formkörper bzw. die gesamte Gießform verteilt vorliegen kann.

Wie bereits oben erläutert, ist das Borsilikatglas bevorzugt in Form von Borsilikatglas-Mikrohohlkugeln im Formkörper bzw. in dem aus einer Schlichte hergestellten Formüberzug enthalten. Näheres zu den Eigenschaften der Mikrohohlkugeln wurde bereits weiter oben ausgeführt.

Ein weiterer Gegenstand der Erfindung betrifft die Verwendung einer Gießform für die Gießereiindustrie, wie sie oben beschrieben worden ist und die ggf. aus mehreren Formkörpern aufgebaut sein kann, in einem Verfahren zum Gießen eines Gussstücks. Das Verfahren wird dabei in üblicher Weise durchgeführt. Zunächst wird eine Gießform hergestellt, bei welcher zumindest die Flächen, die mit dem flüssigen Metall in Berührung gelangen, aus einer Formmasse gebildet sind, welcher Borsilikatglas, insbesondere in Form von. Mikrohohlkugeln enthält. In diese Gießform wird dann das flüssige Metall eingegossen. Als Metalle können an sich alle Metalle verwendet werden, die für den Metallguss üblich sind. Als Metalle können Leichtmetall verwendet werden, wie Aluminium oder Magnesium, die einen relativ niedrigen Schmelzpunkt aufweisen, oder auch Metalle mit einem höheren Siedepunkt, wie Gusseisen oder Stahl. Der Einsatz der Mikrohohlkugeln in Gießformen bzw. Schlichten ist nicht auf eine bestimmt Gussart. beschränkt, sondern umfasst alle Gussarten vom Leicht- bis zum Stahlguss. Besonders bevorzugt wird die erfindungsgemäße Gießform bzw. der erfindungsgemäße Formkörper für die Gießereiindustrie für den Eisenguss verwendet, da hier höhere Temperaturen als beim Leichtmetallguss erreicht werden.

Die Erfindung wird im Weiteren anhand von Beispielen sowie unter Bezugnahme auf die beigefügten Figuren näher erläutert. Dabei zeigen:
- Fig. 1:: eine fotographische Wiedergabe der Oberfläche von Testkörpern (sog. Domkernen), die beim Gießen von Ei- sen erhalten wurden, wobei ein ungeschlichteter Form- körper verwendet wurde, der Additive enthielt, die teilweise durch Borsilikatglas-Mikrohohlkugeln ergänzt waren;
- Fig. 2:: eine fotographische Wiedergabe der Oberfläche von Testkörpern (sog. Domkernen), die beim Gießen von Ei- sen erhalten wurden, wobei ein geschlichteter Formkör- per verwendet wurde. Der Formüberzug wurde einmal ohne und einmal mit Borsilikatglas-Mikrohohlkugeln ausge- führt.

### Analysenmethoden:

### Bestimmung der Schüttdichte:

Ein graduierter, an der 1000 ml Markierung abgeschnittener Glaszylinder wird leer gewogen. Anschließend wird die zu vermessende Substanz mit Hilfe eines Pulvertrichters in einem Zug eingefüllt, sodass sich oberhalb des oberen Randes des Messzylinders ein Schüttkegel ausbildet. Der Schüttkegel wird mit Hilfe eines Lineals abgestrichen und an der Außenseite des Zylinders anhaftendes Material entfernt. Der Zylinder wird erneut gewogen. Die Gewichtsdifferenz entspricht der Schüttdichte.

### Mittlerer Teilchendurchmesser (d₅₀):

Der mittlere Teilchendurchmesser wird durch Laserbeugung auf einem Mastersizer S, Firma Malvern Instruments GmbH, Herrenberg, DE nach Herstellerangaben ermittelt.

Für die folgenden Versuche wurden Borsilikatglas-Mikrohohlkugeln Q-Cel Typ 5020FPS der Firma OMEGA Minerals Germany GmbH verwendet. Die Mikrokugeln weisen eine weiße Farbe, eine Partikelgröße im Bereich von 100 - 200 µm, eine effektive Dichte von 0,14 - 0,70 g/cm³, einen Thermoausdehnungskoeffizienten von 9 x 10⁻⁶/°C und eine Härte (Mohs) von 3,5 bis 4,0 auf. Die durchschnittliche Korngröße der Mikrohohlkugeln beträgt 40 µm. Die Druckfestigkeit beträgt 4 Mpa.

Für die Beurteilung der Formmassen wird jeweils ein Domkern-Abguss hergestellt. Dazu wird aus einer Formmasse, die aus 20 kg Quarzsand 100 T H25, sowie als Bindemittel 160 g Novathen^{®} 155 und 160 g Novathen^{®} 260 (ASK GmbH, Hilden, DE) besteht, ein kreisrunder Hauptkern mit Deckelkern und Eingusskern hergestellt, die einen zylinderförmigen Hohlraum mit einem Durchmesser von 310 mm und einer Höhe von 157 mm einschließen. Am Boden des zylinderförmigen Hohlraums werden 5 kuppelförmige Domkerne, die eine Höhe von 50 mm und einen Durchmesser von 50 mm aufweisen, mittels eines Klebstoffes fixiert. Die Domkerne werden jeweils aus der zu untersuchenden Formmasse hergestellt. Die Form wird zusammengebaut, indem zunächst die Domkerne auf dem Boden des Hohlraums des Hauptkerns festgeklebt werden und der Hohlraum mit dem Deckelkern verschlossen wird. Im Deckelkern ist eine kreisförmige Öffnung mit einem Durchmesser von 20 mm vorgesehen. Auf dem Deckelkern wird dann der trichterförmige Eingusskern in der Weise befestigt, dass der Trichter zur Eingussöffnung des Deckelkerns führt. Der Gussvorgang erfolgt mittels Schwerkraftguss. Die Gießtemperatur beträgt etwa 1410 - 1430 °C. Die Gießzeit beträgt ca. 10 Sekunden, das Gussgewicht ca. 15 kg.

### Beispiele 1 bis 3 und Vergleichsbeispiel 1: Verwendung von Borsilikatglas-Mikrohohlkugeln in Formsanden

Für die Versuchsreihe wurde Quarzsand (Quarzwerke GmbH, Frechen), Typ H 32, zunächst mit den zu prüfenden Additiven und dann mit einem Cold-Box-Bindemittel (Isocure^{®} 366 (Teil I) und Isocure^{®} 666 (Teil II) der Fa. Ashland-Südchemie-Kernfest GmbH (ASK) versetzt. Die Mischzeit pro Komponente betrug eine Minute. Die Zugabemengen des Additivs beliefen sich auf 0 - 2,0 % bezogen auf das Gesamtgewicht des Sandes. Das Bindemittelsystem wurde in Anteilen von 0,8 - 0,9 % je Teil zugesetzt. Der Aushärtevorgang erfolgte mittels Aminbegasung. Hierzu wurde Katalysator 700 der Fa. ASK mit einem Spüldruck von 2 bar durch den Kernkasten geleitet.

Für das Vergleichsbeispiel 1 wurde eine Mischung ohne Additiv hergestellt. Für die Beispiele 1 bis 3 wurden jeweils von ASK, Hilden, DE erhältliche Additive auf Basis von Stärke (Beispiel 1), Glimmer (Beispiel 2), sowie Hartholzgranulat (Beispiel 3) verwendet. Die Additive wurden jeweils pur (Beispiel (a)), sowie mit 2,5 %.Q-Cel^{®} modifiziert (Beispiel (b)) getestet.

Als Gießmetall wurde Eisen (GG 25) verwendet. Die Gießtemperatur lag zwischen 1420 und 1430 °C. Die Gießzeit betrug 10 Sekunden.

Die Versuchsdaten sind in Tabelle 1 zusammengefasst.

**Tabelle 1: Gießversuche mit ungeschlichteten Formkörpern**

| Versuch | Vergl. | 1 A | 1 B | 2 A | 2 B | 3 A | 3 B |
|---|---|---|---|---|---|---|---|
| Additiv | -- | Stärke | Q-CEL/Stärke | Glimmer | Q-CEL/ Glimmer | Hartholz granulat | Q-Cel/ Hartholz granulat |
| Menge | -- | 1,5% | 1,5% | 1,5% | 1,5% | 2% | 1% |
| Teil 1: | 0,8 % | 0,9 % | 0,9 % | 0,9 % | 0,9 % | 0,8 % | 0,8 % |
| Teil 2 : | 0,8 % | 0,9 % | 0,9 % | 0,9 % | 0,9 | 0,8 % | 0,8 % |
| Zusammensetzung [%] | | | | | | | |
| Additiv | | 100,0 | 97,5 | 100,0 | 97,5 | 100,0 | 97,5 |
| Q - CEL | | | 2,5 | | 2,5 | | 2,0 |
| Produktmerkmale | | | | | | | |
| Schüttgewicht | | 0,58-0,68 | 0,58-0,64 | 0,36-0,42 | 0,39-0,4 | 0,25-0,30 | 0,25-0,30 |
| | | | | | | | |
| Gussbewertung | | | | | | | |
| Gießmetall | GG 25 | GG 25 | GG 25 | GG 25 | GG 25 | GG 25 | GG 25 |
| Gießtemperatur | 1420°C | 1420°C | 1429°C | 1420°C | 1420°C | 1429°C | 1420°C |
| | | | | | | | |
| Gießzeit | 10" | 10" | 10" | 10" | 10" | 10" | 10" |
| Blattrippenausprägung | sehr stark | keine | keine | keine | keine | keine | keine |
| Penetration | gering | mittelstark | keine | keine | keine | stark | keine |
| Erosion | | | | stark | keine | | |
| sonstiges | | | | | | | |

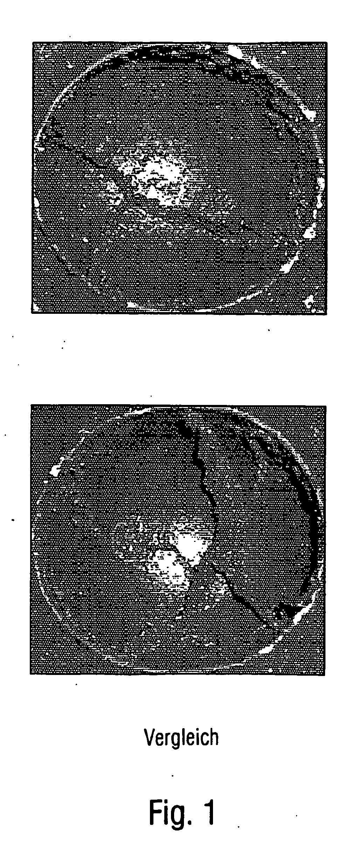

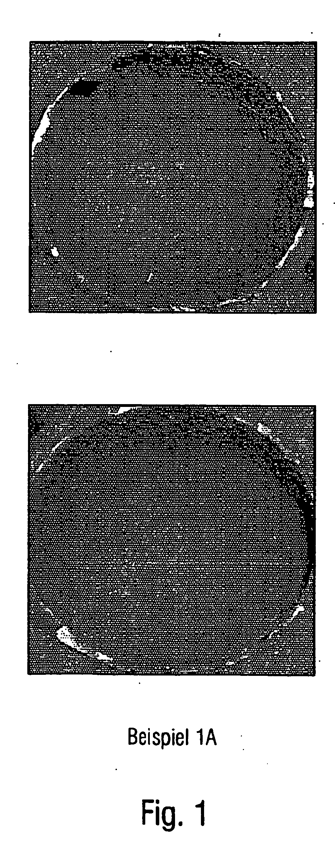

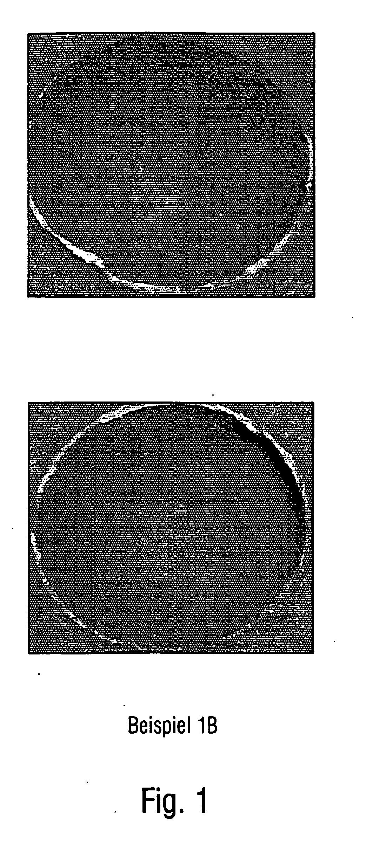

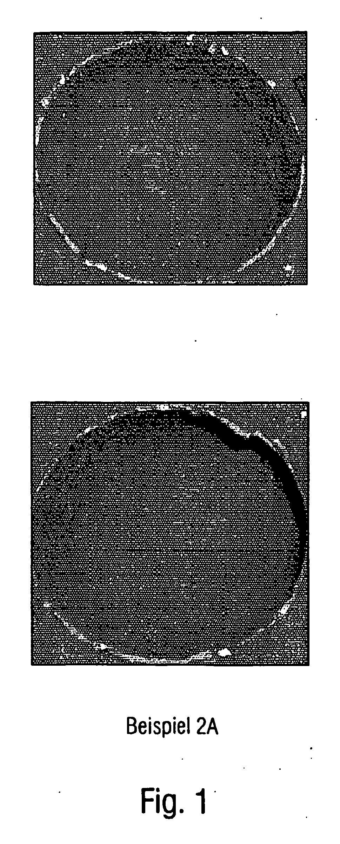

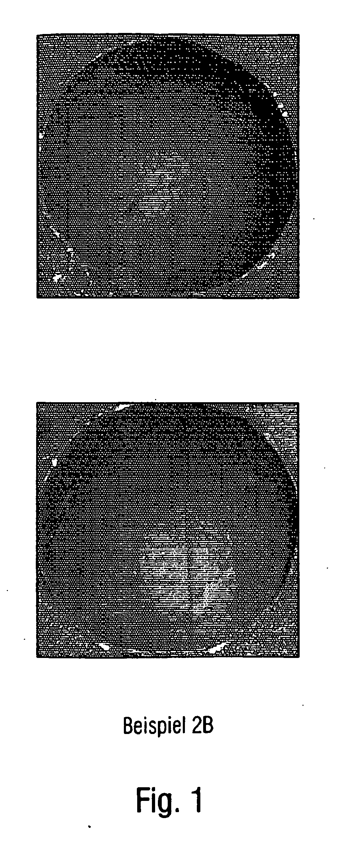

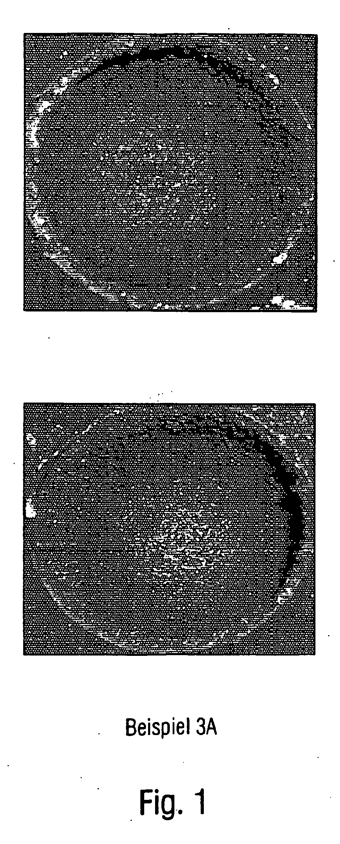

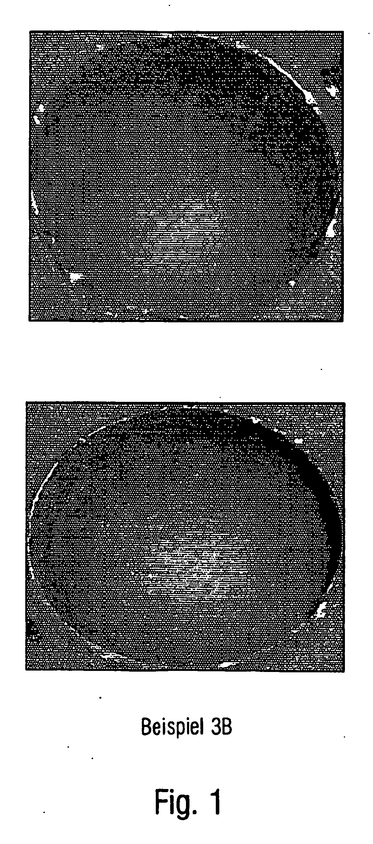

Die erhaltenen Prüfkörper sind in Fig. 1 fotografisch wiedergegeben. Figur 1 zeigt dabei jeweils zwei Aufnahmen des Prüfkörpers, wobei unterschiedliche Belichtungsrichtungen verwendet wurden.

Beim Vergleichsbeispiel, d.h. ohne Zugabe eines Additivs wurde nur eine geringe Penetration beobachtet, erkennbar an der glatten Oberfläche des Prüfkörpers. Es trat jedoch eine sehr starke Blattrippenbildung auf, die auf den fotografischen Aufnahmen als deutliche Stege auf der Oberfläche des Prüfkörpers erkennbar ist.

Im Beispiel 1A, in welchem reine Stärke als Additiv zugegeben worden war, wurde keine Blattrippenbildung beobachtet. Auf der fotografischen Aufnahme sind auf der Oberfläche des Prüfkörpers keine Stege zu erkennen. Die Oberfläche ist gleichmäßig gekrümmt. Es tritt jedoch eine mittelstarke Penetration des Eisens in der Gießform auf. Dies lässt sich auf der fotografischen Aufnahme aus der rauen Oberfläche des Prüfkörpers erkennen, durch die das auftreffende Licht stark gestreut wird.

Im Beispiel 1B, in welchem Q-Cel^{®} mit einem Anteil von 2,5 Gew.-% der Stärke als Additiv zugesetzt wurde, wird keine Blattrippenbildung beobachtet. Die Oberfläche ist gleichmäßig gekrümmt und weist keine scharfkantigen Erhebungen auf. Der Probenkörper zeigt eine saubere Gussoberfläche, erkennbar an der gleichmäßigen, leicht spiegelnden Reflektion des Lichtes.

Wird wie im Beispiel 2A Glimmer als Additiv verwendet, wird zwar keine Blattrippenbildung beobachtet. Der Probenkörper zeigt jedoch starke Erosionen, erkennbar an der unregelmäßigen Form des Probenkörpers.

Werden neben dem Glimmer wie in Beispiel 2B Q-Cel^{®} Mikrohohlkugeln als weiteres Additiv zugesetzt, wird keine Blattrippenbildung beobachtet. Es wird eine saubere Gussoberfläche des Probenkörpers beobachtet. Dies ist in der fotografischen Aufnahme an der leicht reflektierenden Oberfläche des Probenkörpers erkennbar.

In Beispiel 3A wird ein Hartholzgranulat als Additiv eingesetzt. Es wird keine Blattrippenbildung beobachtet. Wie die fotografische Aufnahme zeigt, tritt jedoch eine starke Penetration des flüssigen Eisens in die Gießform ein. Die Oberfläche des Prüfkörpers ist sehr rau und streut das auffallende Licht stark.

Werden wie in Beispiel 3B dem Hartholzgranulat als weiteres Additiv Q-Cel-Mikrohohlkugeln zugesetzt, wird keine Blattrippenbildung beobachtet. Die Oberfläche des Prüfkörpers ist glatt, erkennbar an der Reflexion des auffallenden Lichts.

Bei allen Additivtypen wurde mit sehr geringer Zugabe von Q-Cel-Mikrohohlkugeln eine deutliche Verbesserung der Gussoberfläche erzielt. Hier ist u.U. sogar ein Verzicht des Schlichtens bei dünnwandigen Gussstücken bzw. dünn geschlichteten Kernen möglich.

### Beispiel 4 und 5: Verwendung der Mikrohohlkugeln in Schlichten

Einer bereits gut gegen die Ausbildung von Blattrippen wirkenden Schlichte wurden Q-Cel^{®}-Mikrohohlkugeln zugesetzt. Hierfür wurden Domkerne aus Sand, Additiv und Coldboxharz entsprechend untenstehender Beschreibung hergestellt. Als Schlichte wurde die handelsübliche Kerntop^{®} WV 021010B der Fa. Ashland-Südchemie-Kernfest GmbH verwendet. In Beispiel 4 wurde die reine Schlichte verwendet, während in Beispiel 5 der Schlichte 0,3 Gew.-% Q-Cel^{®}-Mikrohohlkugeln zugesetzt waren. Die Schlichten wurden so in der Viskosität eingestellt, dass die gleichen Schichtdicken beim Tauchen erzielt werden. Die Versuchsbedingungen sowie die Ergebnisse sind in Tabelle 2 zusammengefasst.

**Tabelle 2: Gießversuche mit geschlichteten Formkörpern**

| Beispiel | 4 | 5 |
|---|---|---|
| Additiv | | |
| Sand | H 32 | H 32 |
| Teil 1 (IC 366) | 0,8 % | 0,9 % |
| Teil 2 (IC 666) | 0,8 % | 0,9 % |
| Zusammensetzung [%] | | |
| Kerntop WV 021010 B | 100,0 | 99,7 |
| Q - CEL | -- | 0,3 |
| Produktmerkmale | | |
| Viskosität Brookfield, Spindel 4, 20 UpM | 320mPas | 320mPas |
| Auslaufzeit DIN 4mm | 12,8s | 12,8s |
| Nassschichtdicke (abgemattet) | 250µm | 250µm |
| Gießmetall | SiMo KKK 6586 | SiMo KKK 6586 |
| Gießtemperatur | 1478°C | 1478°C |
| Gießzeit | ca. 10s | ca. 10s |
| Blattrippenausprägung | sehr stark | keine |
| Penetration | gering | keine |
| Erosion | keine | keine |

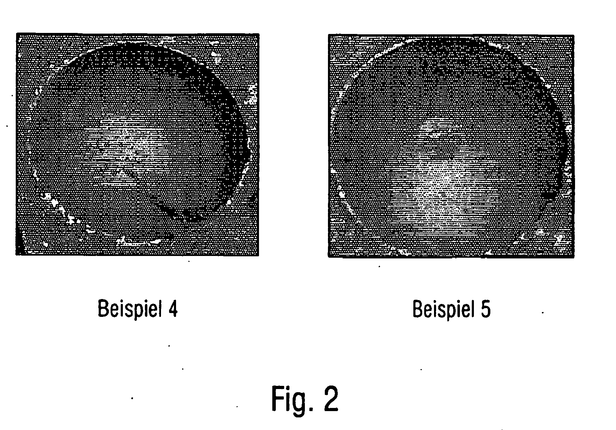

Die erhaltenen Probenkörper sind in Fig. 2 fotografisch wiedergegeben. In Beispiel 4 wird eine leichte Neigung zur Blattrippenbildung beobachtet. Die Oberfläche des Probenkörpers ist leicht matt. Es tritt eine leichte Penetration des flüssigen Eisens in den Formkörper auf. Bei Zusatz von geringen Mengen an Borsilikatglas-Mikrohohlkugeln wird keine Ausbildung von Blattrippen mehr beobachtet. Die Gussoberfläche ist glatt, erkennbar an der Reflektion des Lichts an der Oberfläche des Probenkörpers.

## Patentansprüche

1. Formmasse für die Herstellung von Gießformen für die Gießereiindustrie, mindestens umfassend:
• einen feuerfesten Formstoff,
• ein Bindemittel zum Aushärten der Formmasse,
• einen Anteil eines Borsilikatglases in Form eines Granulats oder eines Pulvers, wobei der mittlere Durchmesser D₅₀ der Partikel des Pulvers oder Granulats im Bereich von 5 bis 500 µm liegt.

2. Formmasse nach Anspruch 1, **dadurch gekennzeichnet, dass** das Borsilikaiglas in einem Anteil von mindestens 0,001 Gew.-%, bezogen auf den feuerfesten Formstoff, in der Formasse enthalten ist.

3. Formmasse nach Anspruch 1 oder 2, **dadurch gekennzeichnet, dass** das Borsilikatglas in Form von Mikrohohlkugeln in der Formmasse enthalten ist.

4. Formasse nach Anspruch 3, **dadurch gekennzeichnet, dass** die Mikrohohlkugeln einen mittleren Durchmesser von weniger als 200 µm aufweisen.

5. Formmasse nach einem der Ansprüche 3 oder 4 **dadurch gekennzeichnet, dass** die Mikrohohlkugeln eine Wandstärke von 5 - 30 % ihres Außendurchmessers aufweisen.

6. Formmasse nach einem der Anspruche 3 bis 5, **dadurch gekennzeichnet, dass** die Mikrohohlkugeln eine Schüttdichte von weniger als 1,2 g/ml aufweisen.

7. Formmasse nach einem der vorhergehenden Ansprüche, **dadurch gekennzeichnet, dass** das Borsilikatglas einen Anteil an Bor, berechnet als B₂O₃, von mehr als 3 Gew.-% aufweist.

8. Formmasse nach einem der vorhergehenden Ansprüche, **dadurch gekennzeichnet, dass** das Borsilikatglas einen Erweichungspunkt von weniger als 1500 °C aufweist.

9. Formmasse nach einem der vorhergehenden Ansprüche, **dadurch gekennzeichnet, dass** das Bindemittel ausgewählt ist aus Cold-Box-Bindemitteln, Hot-Box-Bindemitteln, Silikatbindemitteln, insbesondere Wasserglas, und selbsthärtenden Bindemitteln.

10. Formmasse nach Anspruch 9, **dadurch gekennzeichnet, dass** das Cold-Box-Bindemittel ausgewählt ist aus der Gruppe von Phenol-Urethan-Harzen, Epoxy-Acryl-Harzen, alkalischen Phenolharzen, Wasserglas und selbsthärtenden Harzen.

11. Formmasse nach einem der vorhergehenden Ansprüche, **dadurch gekennzeichnet, dass** die Formmasse neben dem Borsilikatglas zumindest ein weiteres Additiv zur Verringerung der Blattrippenbildung umfasst.

12. Formmasse nach Anspruch 11, **dadurch gekennzeichnet, dass** das zumindest eine weitere Additiv ausgewählt ist aus organischen brennbaren Verbindungen, Glimmer und Eisenoxid.

13. Formmasse nach einem der vorhergehenden Ansprüche, **dadurch gekennzeichnet, dass** die Formmasse einen Zusatz zumindest einer organischen oder anorganischen Säure und/oder Säurequelle umfasst.

14. Formmasse nach den Ansprüchen 1 bis 8, wobei die Formmasse als Schlichte ausgebildet ist.

15. Verfahren zur Herstellung eines Formkörpers für die Gießereiindustrie, wobei
- ein Modell bereitgestellt wird, welches zumindest einem Abschnitt eines Gussstücks entspricht,
- eine Formstoffmischung, welche zumindest einen feuerfesten Formstoff und ein Bindemittel enthält, in das Modell eingebracht wird,
- die Formstoffmischung zu einem Formkörper ausgehärtet wird; und
- der Formkörper aus dem Modell entnommen wird;
**dadurch gekennzeichnet, dass** das Verfahren in der Weise durchgeführt wird, dass zumindest Abschnitte des Formkörpers, welche beim Metallgießen mit flüssigem Metall in Berührung gelangen, von einer Formmasse gemäß einem der Ansprüche 1 bis 14 gebildet werden.

16. Verfahren nach Anspruch 15, **dadurch gekennzeichnet, dass** die in das Modell eingebrachte Formstoffmischung durch eine Formmasse gemäß einem der Ansprüche 1 bis 13 gebildet ist.

17. Verfahren nach Anspruch 15 **dadurch gekennzeichnet, dass** nach der Entnahme des Formkörpers aus dem Modell zumindest Flächen des Formkörpers, die bei einem Gießvorgang mit flüssigem Metall in Berührung gelangen, mit einer Formmasse nach einem der Ansprüche 1 bis 14 bedeckt werden.

18. Formkörper für die Gießereiindustrie, aufgebaut aus einem feuerfesten Formstoff, **dadurch gekennzeichnet, dass** zumindest in den Abschnitten des Formkörpers, die bei einem Gießvorgang mit flüssigem Metall in Berührung gelangen, Borsilikatglas enthalten ist.

19. Formkörper nach Anspruch 18, **dadurch gekennzeichnet, dass** das Borsilikatglas in Form von Mikrohohlkugeln enthalten ist.

20. Verwendung eines Formkörpers für die Gießereiindustrie nach einem der Ansprüche 18 oder 19 in einem Verfahren zum Gießen eines Gusstücks aus einem Metall.

## Claims

1. A molding composition for producing casting molds for the foundry industry, comprising at least:
• a refractory mold material;
• a binder for curing the molding composition;
• a proportion of a borosilicate glass in the form of a granulate or a powder,
wherein the average diameter D₅₀ of the particles of the powder or granulate ranges from 5 to 500 µm.

2. The molding composition as claimed in claim 1, **characterized in that** the borosilicate glass is present in a proportion of at least 0.001 % by weight, based on the refractory mold material, in the molding composition.

3. The molding composition as claimed in claim 1 or 2, **characterized in that** the borosilicate glass is present in the form of hollow microspheres in the molding composition.

4. The molding composition as claimed in claim 3, **characterized in that** the hollow microspheres have an average diameter of less than 200 µm.

5. The molding composition as claimed in either claim 3 or 4, **characterized in that** the hollow microspheres have a wall thickness of 5 - 30% of their external diameter.

6. The molding composition as claimed in any of claims 3 to 5, **characterized in that** the hollow microspheres have a bulk density of less than 1.2 g/ml.

7. The molding composition as claimed in any of the preceding claims, **characterized in that** the borosilicate glass has a proportion of boron, calculated as B₂O₃ of more than 3% by weight.

8. The molding composition as claimed in any of the preceding claims, **characterized in that** the borosilicate glass has a softening point of less than 1500°C.

9. The molding composition as claimed in any of the preceding claims, **characterized in that** the binder is selected from among cold box binders, hot box binders, silicate binders, in particular water glass, and self-curing binders.

10. The molding composition as claimed in claim 9, **characterized in that** the cold box binder is selected from the group consisting of phenol-urethane resins, epoxy acrylic resins, alkaline phenolic resins, water glass and self-curing resins.

11. The molding composition as claimed in any of the preceding claims, **characterized in that** the molding composition comprises at least one further additive for reducing the formation of finning defects in addition to the borosilicate glass.

12. The molding composition as claimed in claim 11, **characterized in that** the at least one further additive is selected from among organic combustible compounds, mica and iron oxide.

13. The molding composition as claimed in any of the preceding claims, **characterized in that** the molding composition comprises an addition of at least one organic or inorganic acid and/or acid source.

14. The molding composition as claimed in any of claims 1 to 8, wherein the molding composition is in the form of a wash.

15. A process for producing a molding for the foundry industry, wherein
• a model which corresponds to at least a section of a casting is provided;
• a mold mix containing a refractory mold material and a binder is introduced into the model;
• the mold mix is cured to form a molding; and
• the molding is taken from the model;
**characterized in that** the process is carried out in such a way that at least sections of the molding which come into contact with liquid metal during metal casting are formed from a molding composition as claimed in any of claims 1 to 14.

16. The process as claimed in claim 15, **characterized in that** the mold mix introduced into the model is formed by a molding composition as claimed in any of claims 1 to 13.

17. The process as claimed in claim 15, **characterized in that** after the molding has been taken from the model, at least the surfaces of the molding which come into contact with liquid metal during a casting process are covered with a molding composition as claimed in any of claims 1 to 14.

18. A molding for the foundry industry made up of a refractory mold material, **characterized in that** borosilicate glass is present in at least the sections of the molding which come into contact with liquid metal during a casting process.

19. The molding as claimed in claim 18, **characterized in that** the borosilicate glass is present in the form of hollow microspheres.

20. The use of a molding for the foundry industry as claimed in either claim 18 or 19 in a process for casting a metal casting.

## Revendications

1. Masse de moulage pour la production de moules de coulée destinés à l'industrie de la fonderie, comprenant au moins :
• une matière de moulage résistant au feu,
• un liant destiné à durcir la masse de moulage,
• une proportion d'un verre borosilicaté sous la forme d'un granule ou d'une poudre, le diamètre moyen D₅₀ des particules de poudre ou du granule se situant dans la plage allant de 5 à 500 µm.

2. Masse de moulage selon la revendication 1, **caractérisée en ce que** le verre borosilicaté est présent dans la masse de moulage en une proportion d'au moins 0,001 % en poids par rapport à la matière de moulage résistant au feu.

3. Masse de moulage selon la revendication 1 ou 2, **caractérisée en ce que** le verre borosilicaté est présent dans la masse de moulage sous la forme de microbilles creuses.

4. Masse de moulage selon la revendication 3, **caractérisée en ce que** les microbilles creuses présentent un diamètre moyen inférieur à 200 µm.

5. Masse de moulage selon l'une des revendications 3 ou 4, **caractérisée en ce que** les microbilles creuses présentent une épaisseur de paroi de 5 - 30 % de leur diamètre externe.

6. Masse de moulage selon l'une des revendications 3 à 5, **caractérisée en ce que** les microbilles creuses présentent une densité en vrac inférieure à 1,2 g/ml.

7. Masse de moulage selon l'une des revendications précédentes, **caractérisée en ce que** le verre borosilicaté présente une proportion de bore, calculée sous la forme de B₂O₃, supérieure à 3 % en poids.

8. Masse de moulage selon l'une des revendications précédentes, **caractérisée en ce que** le verre borosilicaté présente un point de ramollissement inférieur à 1500°C.

9. Masse de moulage selon l'une des revendications précédentes, **caractérisée en ce que** le liant est choisi parmi les liants boîte froide, les liants boîte chaude, les liants silicatés, en particulier le verre soluble, et les liants auto-durcissants.

10. Masse de moulage selon la revendication 9, **caractérisée en ce que** le liant boîte froide est choisi dans le groupe constitué par les résines phénol - uréthane, les résines époxy - acrylique, les résines phénoliques alcalines, le verre soluble et les résines auto-durcissantes.

11. Masse de moulage selon l'une des revendications précédentes, **caractérisée en ce que** la masse de moulage comprend, en plus du verre borosilicaté, au moins un autre additif destiné à réduire la formation de nervures.

12. Masse de moulage selon la revendication 11, **caractérisée en ce que** le au moins un autre additif est choisi parmi les composés organiques combustibles, le mica et l'oxyde de fer.

13. Masse de moulage selon l'une des revendications précédentes, **caractérisée en ce que** la masse de moulage comprend une addition d'au moins un acide organique ou minéral et/ou d'une source d'acide.

14. Masse de moulage selon les revendications 1 à 8, dans laquelle la masse de moulage prend la forme d'un revêtement.

15. Procédé de production d'un corps moulé pour l'industrie de la fonderie, dans lequel
- on prépare un modèle qui correspond au moins à un tronçon d'une pièce à couler,
- un mélange de matière de moulage, comprenant au moins une matière de moulage résistant au feu et un liant, est introduit dans le modèle,
- le mélange de matière de moulage est durci pour former un corps moulé ; et
- le corps moulé est retiré du modèle ;
**caractérisé en ce que** le procédé est réalisé de manière à ce qu'au moins des tronçons du corps moulé qui arrivent au contact du métal liquide lors de la coulée du métal sont formés à partir d'une masse de moulage selon l'une des revendications 1 à 14.

16. Procédé selon la revendication 15, **caractérisé en ce que** le mélange de matière de moulage introduit dans le modèle est formé par une masse de moulage selon l'une des revendications 1 à 13.

17. Procédé selon la revendication 15, **caractérisé en ce que**, après le retrait du corps moulé hors du modèle, au moins des surfaces du corps moulé qui arrivent au contact du métal liquide lors d'une opération de coulée, sont recouvertes d'une masse de moulage selon l'une des revendications 1 à 14.

18. Corps moulé pour l'industrie de la fonderie, constitué d'une matière de moulage résistant au feu, **caractérisé en ce que** du verre borosilicaté est présent au moins dans des tronçons du corps moulé, qui arrivent au contact du métal liquide lors d'une opération de coulée.

19. Corps moulé selon la revendication 18, **caractérisé en ce que** le verre borosilicaté est présent sous la forme de microbilles creuses.

20. Utilisation d'un corps moulé pour l'industrie de la fonderie selon l'une des revendications 18 ou 19 dans un procédé destiné à la coulée d'une pièce à partir d'un métal.
